# EUROPEAN PATENT SPECIFICATION

(11) **EP 0 892 023 B1**
(45) Date of publication and mention of the grant of the patent: **03.12.2003**
(21) Application number: 98810636.5
(22) Date of filing: 07.07.1998
(51) Int. Cl.: C09D 7/12, C09K 19/00, C09K 19/52

(54) **Opaque pigment flakes**
Plättchenförmige opake Pigmente
Pigments opaques à paillettes

(30) Priority: 14.07.1997 EP 97810472
(43) Date of publication of application: 20.01.1999
(73) Proprietor: Ciba Specialty Chemicals Holding Inc., 4057 Basel (CH)
(72) Inventor: Pasquier, Cécile, 2525 Le Landeron (CH); Heeren, Fritz, 3186 Düdingen (CH); Broillet, Jean-François, 1724 Praroman (CH)

(56) References cited:
- EP-A- 0 518 647
- EP-A- 0 814 132
- EP-A- 0 872 336
- WO-A-93/12195
- GB-A- 2 282 145

## Description

The present invention relates to an opaque pigment flake having a light-absorbing layer incorporated between two layers of polymeric material, whereby the polymeric material exhibits a modulated refractive index.

More specifically, the present invention relates to an opaque pigment flake having three layers:
a first layer of a polymeric material,
a second, light-absorbing layer, incorporated between the first and the third layer, wherein the material of the light-absorbing layer is selected from the group consisting of carbon, metals, inorganic and organic pigments and the light-absorbing layer has a reflectivity of not more than 80%, wherein 80% means that 80% of the light falling vertically on a plan surface of the light-absorbing layer in the range of from 380 to 800 nm are reflected, and
a third layer of the same polymeric material used in the first layer,
whereby the polymeric materials exhibit modulated refractive indices, and whereby the layer thickness of the polymeric materials are in the range of 3 to 6 µm each, and
the layer thickness of the light-absorbing layer depends on the way of its preparation:
if the light-absorbing layer is made of an ink or a paint, the thickness is in the range of from 1 to 3 µm,
if the light-absorbing layer is made by physical vapor phase deposition, the thickness is in the range of from 5 to 30 nm, and
if the light-absorbing layer is made out of carbon, the thickness is in the range of from 100 to 200 nm.

US 5,242,617 describes liquid crystal pigments, characterized in that the liquid crystal pigment comprises a laminar particle at least partially coated with a liquid crystalline material. As laminar particles the usual well-known materials such as graphite, aluminum flakes, iron-oxide coated aluminum flakes, mica pigments etc. are used in the form of flakes, leaves and/or scales. This liquid crystal pigment is used as a layer comprising mainly liquid crystalline material in which laminar particles are dispersed or laminar particles onto which liquid crystalline material is precipitated. A drawback is that the laminar particles are not regularly coated with the liquid crystalline material. Further, the orientation of the liquid crystalline material with regard to the surfaces of the randomly dispersed laminar particles is not optimal, which leads to an insufficient coloristic effect.

US 5,362,315 describes a transparent pigment comprising oriented three-dimensionally crosslinked support-free substances of liquid-crystalline structure having a chiral phase. Optionally dyes and pigments, for example carbon black, can be added. As in the above discussed US 5,242,617, the optionally added dyes and pigments are randomly dispersed within the liquid crystalline material. Therefore, major drawbacks of the pigments described in US 5,362,315, and in US 5,242,617 as well, are lacking hiding power and that the pigments have to be applied over black or colored underground in order to exhibit intense interference colors.

EP-A 814,132 describes laminated, multi-layered interference pigments comprising at least one layer consisting of a liquid crystalline polymer, a light-absorbing layer, and wherein the lateral edges are uncoated. However, no examples are given which could support the assertions the claimed pigments were opaque, exhibit a rich colour, and were easy to prepare. Further, description is not enough specific to enable a person skilled in the art to prepare the claimed pigments.

Similar flakes are described in EP-A-0 872 336. Pigment flakes having a sandwich structure are also known from GB-A-2 282 145.

Hence, the object of the invention on hand was to provide opaque pigment flakes which show interference colors and exhibit improved color strength and opacity. Especially, opaque pigment flakes should be provided which can be applied to prepare e.g. automotive paints.

Accordingly, an opaque pigment flake having a light-absorbing layer between two layers of polymeric material was found, whereby the polymeric material exhibits a modulated refractive index.

Further, a method for the preparation of the inventive opaque pigment flakes, the use of the inventive opaque pigment flakes, and a composition comprising the inventive opaque pigment flakes were found.

The inventive opaque pigment flake can be seen as exhibiting a sandwich structure with the following three layers:
a first layer of a polymeric material,
a second, light-absorbing layer, and
a third layer of a polymeric material, which is the same material as in the first layer,
whereby the polymeric material exhibits a modulated refractive index.

The term "modulated refractive index" means that the refractive index of the polymeric material varies periodically along the direction of a light-beam passing through said polymeric material. The period of this variation (or modulation) is such that an interference of light waves in the visible region of the spectrum occurs.

Such a modulation is known and can be realized by a number of known ways. One preferred embodiment of this invention relates to holographic films such as described e.g. in US 4,588,664, US 5,415,950, and US 3,658,526, which contain discrete regions of matter with different refractive indices compared to the surrounding matter.

Another preferred embodiment of this invention relates to cholesteric liquid crystalline polymers as polymeric material, in which the modulation of the refractive index is due to an helical arrangement of nematic layers having the director rotated by a certain angle with respect to an adjacent layer. Particularly preferred is a three-dimensionally crosslinked cholesteric liquid crystalline substance.

As cholesteric liquid crystalline polymers ("LCP") preferably crosslinked side-chain LCP and crosslinked main-chain LCP can be used.

Crosslinked side-chain LCP preferably are
- polymers based on polysiloxanes containing crosslinkable acryloxy- or methacryloxy- groups obtainable from the reaction of an organosilicon compound selected from the group consisting of an organosiloxane having hydrogen atoms bonded directly to silicon atoms, an organosilane having hydrogen atoms bonded directly to silicon atoms and which is capable of being condensed to form organosiloxanes or mixtures thereof, with a compound selected from the group consisting of alkenes, alkynes and mixtures thereof having mesogenic groups which comprises reacting the organosilicon compound in a first step with a compound selected from the group consisting of alkenes, alkynes and mixtures thereof having at least one-non-enolic hydroxyl group protected by a protective group, and in a second step removing the protective group and esterifying the free hydroxyl group with a compound selected from the group consisting of methacrylic acid, acrylic acid, esters, anhydrides, halides and mixtures thereof with the proviso that if the organosilicon compound is an organosilane, then the organosilane is condensed to an organosiloxane. A preferred organosiloxane having hydrogen atoms bonded directly to silicon atoms has units of the formula I

   RₚH_{q}SiO_{(4-p-q)/2} I

   where R is an unsubstituted or with CN or halogen substituted hydrocarbon radical such as C₁-C₁₈alkyl like methyl, ethyl, n-propyl, i-propyl, n-butyl, i-butyl, sec.-butyl, tert.-butyl, n-pentyl, isopentyl, neopentyl, hexyl radicals, heptyl radicals, octyl radicals such as n-octyl and 2,2,4-trimethylpentyl radical, nonyl radicals, decyl radicals, dodecyl radicals, octadecyl radicals such as n-octadecyl radical; alkenyl such as vinyl and allyl; cycloalkyl such as cyclopentyl, cyclohexyl, methylcyclohexyl, cycloheptyl and methylcycloheptyl; aryl such as phenyl, naphthyl, anthryl and phenanthryl; alkaryl such as o-, m-, p-tolyl, xylyl and ethylphenyl; aralkyl such a benzyl and α- and β-phenylethyl; cyanoalkyl radicals such as β-cyanoethyl, halogenated radicals such as 3,3,3-trifluoro-n-propyl, 2,2,2,2',2',2'-hexafluoroisopropyl, heptafluoroisopropyl, o-, m- and p-chlorophenyl; p is an integer having a value of from 0 to 3, with an average value of 1.8 to 2.2, q is an integer having a value of from 0 to 3, with an average value such that at least three hydrogen atoms are bonded directly to silicon atoms per molecule, and the sum of p and q is a maximum of 3. Preferred alkenes or alkynes having mesogenic groups are represented by formula II

   CₙHₘ-(X¹ ₐ-A¹ _{b}-A² _{c})_{d}-Zₑ-(X² _{f}-A³ _{g}-A⁴ ₕ)ᵢ-A⁵ ₖ (II)

   in which n represents an integer preferably having a value from 2 to 8; m has preferably a value (2n-1), or if n is at least 2, it can also have a value (2n-3); X¹ and X² represent the same or different divalent radicals selected from the group -O-, -COO-, -CONH-, -CO-, -S-, -C≡C-, -CH=CH-, -CH=N-, -N=N- and -N=N(O)-; A¹, A², A³ and A⁴ represent the same or different divalent radicals; namely, 1,4-phenylene, and 1,4-cyclohexylene, arylenes substituted with groups having from 1 to 10 carbon atoms, cycloalkylenes substituted with groups having from 1 to 10 carbon atoms, and heteroarylenes substituted with groups having from 1 to 10 carbon atoms; Z represents the same or different divalent, trivalent or tetravalent radicals based on benzene, cyclohexane or cyclopentane radicals, A⁵ represents the same or different, saturated or olefinic unsaturated alkyl, alkoxy or cycloalkyl radicals having from 1 to 16 carbon atoms where possible, cholestane, cholesteryl radical, halogen atoms, hydrogen atoms, hydroxyl, nitrile and trialkylsiloxy groups, in which the alkyl radicals have from 1 to 8 carbon atoms; a, b, c, d, f, g, h, i and k each represent the same or different integers having a value of from 0 to 3, the sum of d and i is a maximum of 4; e represents a number having a value of 0 or 1 and the sum of a+b+c+d+e+f+h+i+k is at least 2. Preferred are alkenes where A⁵ₖ stands for cholesteryl, particularly preferred alkenes of formula II are cholesteryl 4-(prop-2-en-1-oxy)benzoate (obtainable according to DE-A 3,110,048) and
   CH₂=C(Me)-C(O)O-(1,4-phenylene)-O-C(O)-(1,4-phenylene)-O-CH₂-CH=CH₂, more preferred as a mixture of both. A preferred side-chain liquid-crystalline polysiloxane has the following structure: 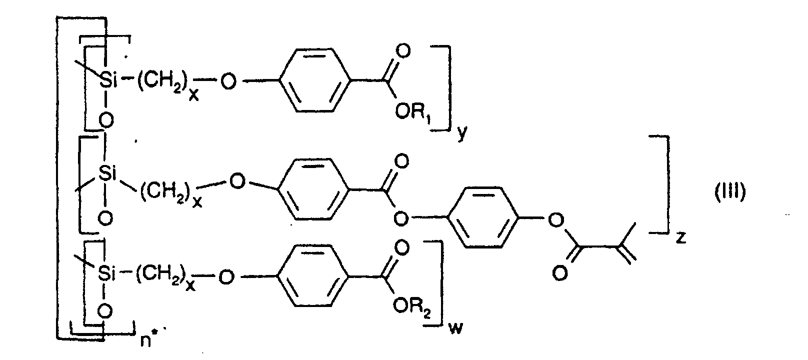 wherein n* stands for an integer from 4 to 6, x is the same or different integer from 2 to 8, preferably from 2 to 4, more preferred 3, w can be a number from 0 to 4, y and z are numbers from 1 - 5, and w+y+z = n^{*}, R₁ means a chiral group such as cholesteryl, its derivatives, and a chiral alkane, and R₂ stands for aryl such as phenyl, biphenyl, alkaryl and alkoxyaryl such as 4-methoxyphenyl, 4-methoxy biphenyl.

Such compounds are described in and obtainable according to US 5,211,877.
- liquid crystal side chain polymers with a nematic and a chiral component, in which the side group mesogens are nematic like e.g. low molecular mono- or difunctional acrylates such as di[4-(n-acryloyloxy)-alkyloxy]benzoic acid - 1,4-phenyl diester, di[4-(n-acryloyloxy)-alkyloxy]benzoic acid - 1,4-(2-methyl)phenyl diester, di[4-(n-acryloyloxy)-alkyloxy]benzoic acid - 1,4-(2-methoxy)phenyl diester, or a mixture thereof, and the chiral component is a low molecular chiral compound such as cholesteryl-3,5-(n-acryloyloxyalkoxy)benzoate, cholesteryl-3,4-(n-acryloyloxyalkoxy)benzoate cholesteryl-2,5-(n-acryloyloxyalkoxy)benzoate, cholesteryl-2,4-(n-acryloyloxyalkoxy)benzoate or a β-estrodiyl-3,17(n-acryloylalkoxy)benzoate, described e.g. in WO 95/32247, or
- other polymers obtainable by polymerizing e.g. sugar derivatives as chiral liquid crystalline monomers which carry at least two polymerizable groups, described e.g. in detail in WO 96/02597.

Crosslinked main-chain LCP in general are based on esterified cellulose ethers, in which the main-chain mesogenes at least approximately exhibit a chiral-nematic order. Usually, such cellulose ethers contain chains of hydrocarbon with 2 to 10 carbon atoms as side-chains, which contain polymerizable, i.e. crosslinkable groups such as acryloyl or methacryloyl groups, such as described e.g. in WO 95/32248 and EP-A 775,737.

To obtain three-dimensionally crosslinked LCP, the above described polymers are crosslinked by known methods, preferred photochemically as described e.g. in US 5,211,877.

In another preferred embodiment of this invention the abovementioned LCP are crosslinked photochemically in the presence of additional acrylates or methacrylates, preferred cholesteryl-4-methacryloyloxy-benzoate, and/or 4-(prop-2-en-1-oxy)phenyl-4-methacryloxybenzoate, preferably in amounts from 5 to 40% by weight of the used polymer. Such a process is described e.g. in US 5,211,877.

In a further preferred embodiment chiral dopants are added to the LCP to enhance coloristic effects.

The polymeric material usually is crosslinked in such a manner that it is applied at a sufficient temperature, depending on the kind of used polymeric material, e.g. - in case polysiloxanes of formula (III) are used - of from -20 to 180°C, preferably 20 to 120°C, to a substrate, then oriented by conventional methods, for example, by treating the melt with a doctor blade or by applying electrical or magnetic fields and, subsequently, exposing the whole composition to radiation from a UV lamp.

Preferably the polymeric material is crosslinked in the presence of a photoinitiator, a polymerization inhibitor, and, if desired, non-mesogenic monomers.

The layer thickness is chosen in the range of from 3 to 6µm.

In a particularly preferred embodiment, a photoinitiator is added to the polymeric material (such as the known IRGACURE® type photoinitiator types) in an effective amount. The use of such a photoinitiator is described in more detail for example in US 5,211,877.

In a further preferred embodiment, the polymeric material of the third layer is brought onto the light-absorbing layer in the same manner as the first layer onto the substrate described above.

The light-absorbing layer exhibits a reflectivity of not more than 80%, preferred of less than 50%, most preferred in the range of from 5 to 30%. A reflectivity of x% means, that x% of the light falling vertically on a plane surface of the light-absorbing layer in the range of from 380 to 800 nm are reflected. The reflectivity can be independent of the wavelength (non selective absorber) or dependent of the wavelength (selective absorber).

The light absorbing layer can be made out of a neat light absorbing material or can be a film comprising a light absorbing material.

The light absorbing layer consists essentially of a material selected from the group consisting of carbon, metals, inorganic and organic pigments.

As a metal, preferably Ag, Au, Cu, Cr, Ge, Mo, Ni, Si, Ti, Pd, Co, W, Ta, V, Co, Fe and Pt, or its alloys thereof can be chosen, more preferred is chromium or copper. Depending on the chosen metal a natural non-interfering oxide layer may form on the surface of the metal layer.

As inorganic pigment metal oxides such as iron oxides, chromium oxides, copper oxides.

As organic pigment all known organic pigments can be used satisfying the above defined range for the reflectivity, e.g. azopigments like mono azo-, disazo-, naphthol-, benzimid-azolones-, azocondensation-, metal complex-, isoindolinone- and isoindoline-pigments, indigo, chinophthalon-pigments, dioxazine-pigments, as well as polycyclic pigments such as quinacridones, phthalocyanines, perylenes, perinones, and thioindigo, further, anthraquinone pigments such as aminoanthraquinones, hydroxyanthraquinones, anthrapyrimidines, indanthrones, flavanthrones, pyranthrones, anthanthrones, and isoviolanthrones, and diketopyrrolopyrrole-pigments.

If the light absorbing layer is a film it can be made of an ink or a paint into which is incorporated the light absorbing material. This can be done by conventional methods such as dispersing. Usually, the concentration of the incorporated material is chosen as high as possible, e.g. 50% for an ink with carbon black. The thickness of the film is in the range of from 1 to 3 µm. In general, thickness and concentration are adjusted in such a way to get enough light absorption.

If the light absorbing layer is a neat layer of light absorbing material, generally it can be applied by a conventional physical vapor phase deposition process such as sputtering, evaporation by electron beam or heating (see e.g. Handbook of Thin Films, L.I.Maissel, Mac Graw Hill, 1970, p.1-1 to 4-44).

The thickness of the neat layer as light absorbing layer is chosen in the range of from 5 and 30 nm. In case carbon is chosen as light absorbing material, then the thickness is in the range of from 100 to 200, preferred of from 120 to 180 nm.

After coating the third layer onto the light-absorbing layer, preferably analogously to the way described for the first layer above, the obtained pigment material generally is removed mechanically by peeling off the support by known methods, e.g. by guiding the backing over a deflecting roller of small diameter, or using a ultrasonic bath. However, any other method by which the polymerized material can be removed from the backing is also suitable.

To obtain flakes, the pigment material usually can be milled in a known manner, for example using a mill, such as an air-jet mill.

In another embodiment, the polymeric material of the first and third layer, can be made of an organic polymer comprising a volume phase hologram. Corresponding organic polymers are known e.g. from US 5,415,950, in which a photosensitive precursor comprising a monomer, a binder, and a photoinitiator system is reacted to form an organic polymer. Usually, the precursor is a derivative of an aromatic acrylate or methacrylate such as 2-phenoxyethyl acrylate, 2-phenoxyethyl methacrylate, phenol ethoxylate monoacrylate, 2-(p-chlorophenoxy)ethyl acrylate,p-chlorophenyl acrylate, phenyl acrylate, 2-phenylethyl acrylate, 2-(1-napthyloxy)ethyl acrylate, o-biphenyl methacrylate, o-biphenyl acrylate, ethyl 1-benzoyl-2-vinyl-1-cyclopropane carboxylate and mixtures thereof, as well as N-vinyl carbazole; 2,4,6-tribromophenyl acrylate or methacrylate, pentachlorophenyl acrylate or methacrylate and mixtures thereof. As a binder polyvinyl butyral and polyvinylacetate, and fluorine containing compounds such as copolymers of tetrafluoroethylene and/or hexafluoropropylene with vinyl acetate can be used. As photoinitiator system one or more compounds which directly furnish free-radicals when activated by actinic radiation can be chosen. Typically, the photoinitiator system is a conventional one which contains a photoinitiator and a sensitizer that extends the spectral response of the system to the wavelength of the actinic radiation, typically the visible or near infrared spectral region. Details about the process of preparation of such polymers including phase volume holograms are described e.g. in US 5,415,950 and US 4,588,664.

Another embodiment of the present invention relates to a process for the preparation of the opaque pigment flakes characterized in coating a polymeric material with a light-absorbing layer, and then coating the uncoated surface of the light-absorbing layer of the obtained coated polymeric material with the same polymeric material, whereby the polymeric material exhibits a modulated refractive index.

A further preferred embodiment of the present invention relates to a process for the preparation of the inventive opaque pigment flakes characterized in
(a) coating one surface of a substrate layer with a polymeric material in a wished thickness, at a temperature where the liquid crystal exhibits a cholesteric phase,
(b) orienting the polymeric material by known measures, preferably by knife-coating or an electric or magnetic field,
(c) fixing the ordered cholesteric phase of the polymeric material by crosslinking it three-dimensionally, preferably by irradiating the polymeric material comprising a photoinitiator with UV-light,
(d) coating the surface of the crosslinked polymeric material which is averted from the substrate layer with a light-absorbing layer,
(e) coating the surface of the light-absorbing layer which is averted from the substrate layer with polymeric material according to the above described steps (a) to (c),
(f) removing the obtained pigment material from the substrate layer, preferably mechanically, for example using an ultrasonic bath or by guiding the backing of the substrate layer over a deflecting roller of small diameter,
(g) milling the peeled-off pigment material to the desired size, yielding the inventive pigment flakes.

Another embodiment of the present invention relates to a process for the preparation of opaque pigment flakes, characterized in coating a holographic recording material to a support, laminating the surface of the holographic recording material opposed to the support with a metallized polymer such as aluminized polyethylene terephthalate, exposing the holographic recording material through the support, substituting a diffusion element support for the metallized polymer, heating the laminated, supported and exposed holographic recording material, subsequently removing the diffusion element support, coating the surface of the exposed holographic recording material which is averted from the support with a light-absorbing layer, coating the surface of the light-absorbing layer which is averted from the support with another layer of exposed holographic recording material obtained by the same procedure described above, removing the obtained pigment material from the support, preferably mechanically, for example using an ultrasonic bath or by guiding the backing of the support over a deflecting roller of small diameter, and, finally, milling the peeled-off pigment material to the desired size, yielding the inventive pigment flakes comprising a volume hologram.
Another embodiment of the present invention is related to the use of the inventive opaque pigment flakes as pigments for coloring high molecular weight organic materials, e.g. biopolymers, plastic materials, including fibres, glasses, ceramic products, for formulations in decorative cosmetics, for the preparation of inks, printing inks, paint systems, in particular automotive paints and dispersion colors.

Illustrative examples of suitable organic materials of high molecular weight which can be colored with the opaque pigment flakes of this invention are vinyl polymers, for example polystyrene, poly-α-methylstyrene, poly-p-methylstyrene, poly-p-hydroxystyrene, poly-p-hydroxy-phenylstyrene, polymethyl methacrylate and polyacrylamide as well as the corresponding methacrylic compounds, polymethylmaleate, polyacrylonitrile, polymethacrylonitrile, polyvinyl chloride, polyvinyl fluoride, polyvinylidene chloride, polyvinylidene fluoride, polyvinyl acetate, polymethyl vinyl ether and polybutyl vinyl ether; polymers which are derived from maleinimide and/or maleic anhydride, such as copolymers of maleic anhydride with styrene; polyvinyl pyrrolidone; ABS; ASA; polyamides; polyimides; polyamidimides; polysulfones; polyether sulfones; polyphenylene oxides; polyurethanes; polyureas; polycarbonates; polyarylenes; polyarylene sulfides; polyepoxides; polyolefins such as polyethylene and polypropylene; polyalkadienes; biopolymers and the derivatives thereof e.g. cellulose, cellulose ethers and esters such as ethylcellulose, nitrocellulose, cellulose acetate and cellulose butyrate, starch, chitin, chitosan, gelatine, zein; natural resins; synthetic resins such as alkyd resins, acrylic resins, phenolic resins, epoxide resins, aminoformaldehyde resins such as urea/formaldehyde resins and melamine/formaldehyde resin; vulcanized rubber; casein; silicone and silicone resins; rubber, chlorinated rubber; and also polymers which are used, for example, as binders in paint systems, such as novolaks which are derived from C₁-C₆-aldehydes such as formaldehyde and acetaldehyde and a binucluear or mononuclear, preferably mononuclear, phenol which, if desired, is substituted by one or two C₁-C₉alkyl groups, one or two halogen atoms or one phenyl ring, such as o-, m- or p-cresol, xylene, p-tert-butylphenol, o-, m- or p-nonylphenol, p-chlorophenol or p-phenylphenol, or a compound having more than one phenolic group such as resorcinol, bis(4-hydroxyphenyl)methane or 2,2-bis(4-hydroxyphenyl)propane; as well as suitable mixtures of said materials.

Particularly preferred high molecular weight organic materials, in particular for the preparation of a paint system, a printing ink or ink, are, for example, cellulose ethers and esters, e.g. ethylcellulose, nitrocellulose, cellulose acetate and cellulose butyrate, natural resins or synthetic resins (polymerization or condensation resins) such as aminoplasts, in particular urea/formaldehyde and melamine/formaldehyde resins, alkyd resins, phenolic plastics, polycarbonates, polyolefins, polystyrene, polyvinyl chloride, polyamides, polyurethanes, polyester, ABS, ASA, polyphenylene oxides, vulcanized rubber, casein, silicone and silicone resins as well as their possible mixtures with one another.

It is also possible to use high molecular weight organic materials in dissolved form as film formers, for example boiled linseed oil, nitrocellulose, alkyd resins, phenolic resins, melamine/formaldehyde and urea/formaldehyde resins as well as acrylic resins.

Said high molecular weight organic compounds may be obtained singly or in admixture, for example in the form of granules, plastic materials, melts or in the form of solutions, in particular for the preparation of spinning solutions, paint systems, coating materials, inks or printing inks.

In a particularly preferred embodiment of this invention, the opaque pigment flakes are used for the mass coloration of polyvinyl chloride, polyamides and, especially, polyolefins such as polyethylene and polypropylene as well as for the preparation of paint systems, including powder coatings, inks, printing inks and coating colors.

Illustrative examples of preferred binders for paint systems are alkyd/melamine resin paints, acryl/melamine resin paints, cellulose acetate/cellulose butyrate paints and two-pack system lacquers based on acrylic resins which are crosslinkable with polyisocyanate.

According to observations made to date, the opaque pigment flakes can be added in any desired amount to the material to be colored, depending on the end use requirements. In the case of high molecular weight organic materials, for example, the pigments composed according to this invention can be used in an amount in the range from 0.01 to 40, preferably from 0.1 to 20 % by weight, based on the total weight of the colored high molecular weight organic material.

Hence, another embodiment of the present invention relates to a composition comprising
(a) 0.01 to 40, preferably 0.1 to 20% by weight, based on the total amount of (a) and (b), of opaque pigment flakes according to the present invention, and
(b) 99.99 to 60, preferably 99.9 to 80% by weight, based on the total amount of (a) and (b) of a high molecular organic material, and
(c) if desired, customary additives such as fillers, paint auxiliaries, siccatives, plasticizers, UV-stabilizers, and/or additional pigments in usual amounts such as from 0.01 to 40, based on the total amount of (a) and (b).

Further, it was found that the amount of an opaque pigment, showing interference colors, required to obtain unusual visual effects is drastically reduced, while significantly expanding the available color palette, by despositing onto a substrate a three-coat finish comprising a first coating containing an opaque white, black or colored pigment to achieve total hiding, applying a second coating (midcoat) which contains the inventive opaque pigment flakes over the first coat, followed by a conventional clearcoat.

Generally, the first coating is applied onto the primer, or it can serve as a colored primer.

Preferably the second coat contains the inventive opaque pigment flakes in a flake/binder ratio in the range of from 0.001/100 up to 7/100, preferably from 0.001/100 to 3/100, whereby the second coat usually is applied in a thickness in the range of from 8 to 40, preferred 10 to 20µm.

In a further preferred modification, the substrate is finished with a basecoat/clearcoat finish wherein the clear topcoat having a thickness usually in the range of from 25 to 75, preferably from 40 to 65µm, is tinted with the inventive opaque pigment flakes and applied directly over an opaque black, white or colored basecoat, which in turn is applied onto the primer or which itself serves as a colored primer. In general, the second coat contains the inventive opaque pigment flakes in a flake/binder ratio in the range of from 0.001/100 up to 7/100, preferably from 0.001/100 to 5/100.

Preferably, the binder is a heat or light curable high molecular weight organic material that is conventially utilized for the solvent-based clear topcoat in basecoat/clearcoat automotive finishes. In general, such high molecular weight organic materials include e.g. polyacrylics, polymethacrylics, polyesters, polyurethanes and copolymers thereof.

Normally, the starting materials for obtaining the coatings, such as the inventive pigment flakes, a solvent and the binder, also contain other ingredients such as stabilizers, including UV absorbers and hindered amine light stabilizers, dispersants, wetting agents, anti-settling agents and the like.

Therefore, another preferred embodiment of the present invention relates to a process for achieving unique polychromism effects in automotive finishes by applying a two-coat or three-coat finish to a substrate and achieving polychromism in the finish by incorporating the inventive opaque pigment flakes into the topcoat or a midcoat, which is applied over a colored, black or white basecoat, to the inventive two-coat or three-coat finish obtained by this process, and to a coating substrate comprising a first coating and a second coating wherein the first coating comprises an effective pigmenting amount of an opaque pigment; and a second coating comprises an effective amount of the inventive pigment flakes, and, if desired, a transparent topcoat.

The inventive coated substrate is preferably a transportation vehicle, such as an automobile, bicycle, motorcycle, van, truck or boat, most preferred is the application of the two-coat system for automotive paints.

The pigmenting of the high molecular weight organic materials with the opaque pigment flakes is usually effected by incorporating said opaque pigment flakes, if desired in the form of masterbatches, in the high molecular weight organic materials using customary apparatus suitable to this end, such as extruders, roll mills, mixing or milling apparatus. The material thus treated is then normally brought into the desired final form by methods which are known per se, such as calandering, molding, extrusion molding, coating, casting, extruding, or by injection molding, wherein preferably necessary steps have to be taken not to destroy the inventive pigment flakes.

To produce non-brittle moldings or to diminish their brittleness, so-called plasticizers can be added to the high molecular weight substances prior to molding. Plasticizers may be, for example, esters of phosphoric acid, phthalic acid and sebacic acid. Said plasticizers may be added before, during or after pigmenting the high molecular weight substances with the opaque pigment flakes of this invention.

To obtain different shades, the opaque pigment flakes may advantageously be used in admixture with fillers, transparent and opaque white, colored and/or black pigments as well as customary luster pigments in the desired amount.

For the preparation of paints systems, coating materials, inks and printing inks, the corresponding high molecular weight organic substances, such as binders, synthetic resin dispersions etc. and the opaque pigment flakes are usually dispersed or dissolved together, if desired together with customary additives such as fillers, paint auxiliaries, siccatives, plasticizers and/or additional pigments, in a common solvent or mixture of solvents. This can be achieved by dispersing or dissolving the individual components by themselves, or also several components together, and only then bringing all components together, or by adding everything together at once.

For application in printing, all customary industrial printing processes can be employed, such as screen printing, rotogravure, bronze printing, flexographic printing and offset printing.

The opaque pigment flakes do have the advantage over known opaque pigment as their color strength and opacity is improved, and, the inventive opaque pigment flakes can be applied to the preparation of automotive lacquers.

### Examples

### Example 1:

(a) 1 g of a polyorganosiloxane (prepared as described in example 1a) of EP-A 358,208), 0.2 g of cholesterol 4-methacryloyloxy-benzoate (described in Polym. Eng. Sci. 36 (24) (1996) 2921), 0.1 g hexanediol dimethacrylate, 0.03 g of 2-methyl-1-(4-(methylthio)phenyl)-2-morpholinpropanone-1 (IRGACURE®907, Ciba Specialty Chemicals), 0.005 g isopropenylthioxanthone and 500 ppm (related to the polyorganosiloxane) 4-tert.-butyl catechol are mixed with 20 ml of dichloromethane. Then the solvent is removed under reduced pressure. The obtained homogeneous mixture is heated to 110°C giving a viscous liquid crystal. Then the liquid crystalline mixture is knife-coated on a polyester sheet and maintained at the same temperature (110°C). The thickness of the layer is 3µm. Immediately thereafter this layer is then irradiated for 30 seconds with UV-light at a wavelength in the range of from 200 to 440 nm and thus crosslinked three-dimensionally.
(b) A black ink composed of 30% by weight of a black concentrate (carbon black composition (Pigment Black 7) (in the form of MICROLITH®Black C-WA, conc. 25%; Ciba Specialty Chemicals)), 20% by weight of isopropanol, 53% by weight of water and 2% by weight of an aqueous solution of ammonia (25% by weight)), 67% by weight of a clear varnish (60% of an acrylic resin base (NEOCRYL®A 1052, Zeneca)), 15% by weight of isopropanol and 25% by weight of water), and 3% of a polyimine hardener (crosslinker) (NEOCRYL®CX 100, Zeneca) is knife-coated on the above obtained liquid crystalline layer in a wet layer thickness of 5µm and cured for 5 minutes at 100°C.
(c) A mixture of the same composition as described under (a) is knife-coated in the same manner as in (a) on the new layer obtained in (b). Layer thickness: 3µm
(d) The obtained material is removed mechanically by peeling off from the support using an ultrasonic bath. Milling of the peeled-off material is then carried out in an air-jet mill.

### Example 2:

(a) The same procedure as described in ex. 1 (a) is repeated.
(b) Chromium is then evaporated on the liquid crystalline layer obtained in step (a) in a reduced atmosphere of no more than 1.33•10⁻³ Pa (10⁻⁵ Torr) until a layer thickness of 20 nm is reached.
(c) A mixture of the same composition as described under (a) is knife-coated in the same manner as in (a) onto the new layer obtained in (b). Layer thickness: 3 µm.
(d) The obtained material is removed mechanically by peeling off from the support using an ultrasonic bath. Milling of the peeled-off material is then carried out in an air-jet mill.

## Claims

1. An opaque pigment flake having three layers:
a first layer of a polymeric material,
a second, light-absorbing layer, incorporated between the first and the third layer, wherein the material of the light-absorbing layer is selected from the group consisting of carbon, metals, inorganic and organic pigments and the light-absorbing layer has a reflectivity of not more than 80%, wherein 80% means that 80% of the light falling vertically on a plan surface of the light-absorbing layer in the range of from 380 to 800 nm are reflected, and
a third layer of the same polymeric material used in the first layer,
whereby the polymeric materials exhibit modulated refractive indices, and whereby
the layer thickness of the polymeric materials are in the range of 3 to 6 µm each, and
the layer thickness of the light-absorbing layer depends on the way of its preparation:
if the light-absorbing layer is made of an ink or a paint, the thickness is in the range of from 1 to 3 µm,
if the light-absorbing layer is made by physical vapor phase deposition, the thickness is in the range of from 5 to 30 nm, and
if the light-absorbing layer is made out of carbon, the thickness is in the range of from 100 to 200 nm.

2. Pigment flake according to claim 1, **characterized in that** the polymeric material is a three-dimensionally crosslinked cholesteric liquid crystalline substance.

3. A process for the preparation of a pigment flake according to claims 1 and 2, **characterized in** coating a polymeric material with a light-absorbing layer, and then coating the uncoated surface of the light-absorbing layer of the obtained coated polymeric material with the same polymeric material, whereby the polymeric material exhibits a modulated refractive index.

4. Use of the opaque pigment flakes according to claims 1 and 2 or prepared according to claim 3 as pigments for coloring high molecular weight organic materials, glasses, ceramic products, for formulations in decorative cosmetics, for the preparation of inks, printing inks, paint systems, in particular automotive lacquers and dispersion colors.

5. Composition comprising
(a) 0.01 to 40% by weight, based on the total amount of (a) and (b), of opaque pigment flakes according to claims 1 and 2, and
(b) 99.99 to 60% by weight, based on the total amount of (a) and (b), of a high molecular organic material, and
(c) if desired, customary additives such as fillers, paint auxiliaries, siccatives, plasticizers, UV-stabilizers, and/or additional pigments in usual amounts such as from 0.1 to 40%, based on the total amount of (a) and (b).

6. A coated substrate comprising a first coating and a second coating, wherein the first coating comprises an effective pigmenting amount of an opaque pigment; and the second coating comprises an effective amount of the pigment flakes according to claims 1 and 2.

## Patentansprüche

1. Opakes Pigmentplättchen mit drei Schichten:
eine erste Schicht aus einem polymeren Material,
eine zweite, Licht-absorbierende Schicht, die zwischen der ersten und der dritten Schicht eingelagert ist,
worin das Material der Licht-absorbierenden Schicht aus der Gruppe ausgewählt ist, bestehend aus Kohlenstoff, Metallen, anorganischen und organischen Pigmenten, und worin die Licht-absorbierende Schicht ein Reflexionsvermögen von nicht mehr als 80 % aufweist, wobei 80 % bedeutet, daß 80 % des Lichts, das vertikal auf die ebene Oberfläche der Licht-absorbierenden Schicht fällt, im Bereich von 380 bis 800 nm reflektiert wird, und
eine dritte Schicht aus demselben polymeren Material, das in der ersten Schicht verwendet wurde,
wobei die polymeren Materialien modulierte Brechungsindizes aufweisen und wobei die Schichtdicke der polymeren Materialien jeweils im Bereich von 3 bis 6 µm liegt und die Schichtdicke der Licht-absorbierenden Schicht von ihrem Herstellungsweg abhängt:
wird die Licht-absorbierende Schicht aus einer Tinte oder einer Farbe hergestellt, liegt die Dicke im Bereich von 1 bis 3 µm,
wird die Licht-absorbierende Schicht durch physikalische Dampfphasenabscheidung hergestellt, liegt die Dicke im Bereich von 5 bis 30 nm und
wird die Licht-absorbierende Schicht aus Kohlenstoff hergestellt, liegt die Dicke im Bereich von 100 bis 200 nm.

2. Pigmentplättchen nach Anspruch 1, **dadurch gekennzeichnet, daß** das polymere Material eine dreidimensional vemetzte, cholesterische, flüssigkristalline Substanz ist.

3. Verfahren zur Herstellung eines Pigmentplättchens nach den Ansprüchen 1 und 2, **gekennzeichnet durch** die Beschichtung eines polymeren Materials mit einer Licht-absorvierenden Schicht, und der anschließenden Beschichtung der unbeschichteten Oberfläche der Licht-absorbierenden Schicht des erhaltenen beschichteten polymeren Materials mit dem gleichen polymeren Material, wobei das polymere Material einen modulierten Brechungsindex aufweist.

4. Verwendung der opaken Pigmentplättchen nach den Ansprüchen 1 und 2 oder der, die nach Anspruch 3 hergestellt wurden, als Pigmente zur Färbung organischer Materialien mit hohem Molekulargewicht, Gläsern, Keramikprodukten, für Formulierungen in dekorativen Kosmetika, zur Herstellung von Tinten, Drucktinten, Farbsystemen, insbesondere Automobillacken und Dispersionsfarben.

5. Zusammensetzung, umfassend
(a) 0,01 bis 40 Gew.-%, basierend auf der Gesamtmenge von (a) und (b), der opaken Pigmentplättchen gemäß den Ansprüchen 1 und 2, und
(b) 99,99 bis 60 Gew.-%, basierend auf der Gesamtmenge von (a) und (b), eines organischen Materials mit hohem Molekulargewicht, und
(c) wenn erwünscht, übliche Zusatzstoffe wie Füllstoffe, Farbhilfsmittel, Sikkative, Weichmacher, UV-Stabilisatoren und/oder zusätzliche Pigmente in üblichen Mengen, wie von 0,01 bis 40 %, basierend auf der Gesamtmenge von (a) und (b).

6. Beschichtetes Substrat, umfassend eine erste Schicht und eine zweite Schicht, wobei die erste Schicht eine wirksam pigmentierende Menge eines opaken Pigments umfaßt; und die zweite Schicht eine wirksame Menge der Pigmentplättchen gemäß den Ansprüchen 1 und 2 umfaßt.

## Revendications

1. Paillette de pigment opaque comportant trois couches :
une première couche d'une matière polymère,
une seconde couche, absorbant la lumière, incorporée entre la première et la troisième couche, la matière de la couche absorbant la lumière étant choisie dans le groupe formée par le carbone, les métaux, les pigments minéraux et organiques, et la couche absorbant la lumière ayant une réflectivité d'au plus 80 %, où 80 % signifie que 80 % de la lumière tombant verticalement sur une surface plane de la couche absorbant la lumière dans la bande de 380 à 800 nm est réfléchie, et
une troisième couche de la même matière polymère que celle utilisée dans la première couche,
en sorte que les matières polymères présentent des indices de réfraction modulés, et en sorte que l'épaisseur de couche des matières polymères se situe dans l'intervalle de 3 à 6 µm pour chacune, et l'épaisseur de couche de la couche absorbant la lumière dépend de son mode de préparation :
si la couche absorbant la lumière est constituée d'une encre ou d'une peinture, l'épaisseur se situe dans l'intervalle de 1 à 3 µm,
si la couche absorbant la lumière est formée par dépôt physique en phase vapeur, l'épaisseur se situe dans l'intervalle de 5 à 30 nm, et
si la couche absorbant la lumière est constituée de carbone, l'épaisseur se situe dans l'intervalle de 100 à 200 nm.

2. Paillette de pigment selon la revendication 1, **caractérisée en ce que** la matière polymère est une substance cristalline liquide cholestérique réticulée dans les trois dimensions.

3. Procédé pour la préparation d'une paillette de pigment selon les revendications 1 et 2, **caractérisé en ce qu'**on revêt une matière polymère d'une couche absorbant la lumière, puis on revêt la surface non revêtue de la couche absorbant la lumière de la matière polymère revêtue obtenue avec la même matière polymère, en sorte que la matière polymère présente un indice de réfraction modulé.

4. Utilisation des paillettes de pigment opaque selon les revendications 1 et 2 ou préparées selon la revendication 3 comme pigments pour la coloration de matières organiques de haut poids moléculaire, de verres, de produits céramiques, pour des formulations dans des produits cosmétiques décoratifs, pour la préparation d'encres, d'encres d'impression, de systèmes de peintures, en particulier des vernis pour automobile et des couleurs de dispersion.

5. Composition comprenant
(a)0,01 à 40 % en poids, par rapport à la quantité totale de (a) et (b), de paillettes de pigment opaque selon les revendications 1 et 2, et
(b)99,99 à 60 % en poids, par rapport à la quantité totale de (a) et (b), d'une matière organique de haut poids moléculaire, et
(c)facultativement, des additifs usuels tels que des charges, auxiliaires pour peinture, siccatifs, plastifiants, stabilisants UV et/ou pigments supplémentaires, en des quantités usuelles comme de 0,1 à 40 % par rapport à la quantité totale de (a) et (b).

6. Substrat revêtu comprenant un premier revêtement et un second revêtement, dans lequel le premier revêtement comprend une quantité pigmentante efficace d'un pigment opaque ; et le second revêtement comprend une quantité efficace des paillettes de pigment selon les revendications 1 et 2.
